# EUROPEAN PATENT APPLICATION

(11) **EP 4 310 564 A1**
(43) Date of publication of application: **24.01.2024**
(21) Application number: 21931040.6
(22) Date of filing: 16.06.2021
(51) Int. Cl.: G02B 6/44

(54) **FLEXIBLE OPTICAL FIBER MANAGEMENT SYSTEM AND NETWORK ACCESS METHOD**

(30) Priority: 17.03.2021 CN 202120549652 U; 10.06.2021 CN 202110649078
(71) Applicant: Fiberhome Telecommunication Technologies Co., Ltd, Wuhan, Hubei 430000 (CN)
(72) Inventor: WEI, Wenzhen, Wuhan, Hubei 430000 (CN)
(74) Representative: Lohmanns Lohmanns & Partner mbB
(86) International application number: PCT/CN2021/100238
(87) International publication number: WO 2022/193455

(57) **Abstract**

A flexible optical fiber management system and a network access method. The system comprises: a box, the box being successively divided into, from one side to the other side: a first region (A), a connection region (6), and a second region (B). The connection region (6) is located between the first region (A) and the second region (B); the first region (A) comprises a first mounting region (3) for mounting a first optical cable assembly and a first fiber splicing region (8) for splicing a first optical cable, and the first fiber splicing region (8) is arranged corresponding to the first mounting region (3); the second region (B) comprises a second mounting region (4) for mounting a second optical cable; the connection region (6) is used for communicating the second optical cable with the first optical cable, wherein the connection region (6) comprises multiple working positions (61) for communicating the first optical cable with the first optical cable and multiple storage places (62) for storage. Other users who are using a network are not required to be disconnected from the network, and a first tail fiber of a user who is disconnected from the network can be stored at the storage position (62) next to the first tail fiber, such that re-provisioning of subsequent services is facilitated.

## Description

### Field of the Invention

The present invention relates to the field of optical fiber distribution box for communication, in particular to a flexible optical fiber management system.

### Background of the Invention

At present, the optical fiber distribution box (ODB) is an auxiliary equipment for terminal wiring in the network construction of the communication industry, and generally used to connect the trunk optical cable and distribution optical cable outdoors, in the corridor or indoors, and to protect the optical fiber connector.

In related technologies, during the subsequent use of optical fiber distribution boxes, business changes such as the increase or decrease of users often occur, when a general large-core high-density box body is disconnecting a user from the network, it needs to disconnect other users before disconnecting the user that really needs to be disconnected, and then connect other users repeatedly, affecting the use of other users. At the same time, the tail fiber of the disconnected user has no location for storage, making it inconvenient to re-provision subsequent services.

Therefore, it is necessary to design a flexible optical fiber management system to overcome the above-mentioned problem.

### Summary of the Invention

The embodiment of the present invention provides a flexible optical fiber management system and a network access method to solve the problem in the related technologies that when a user disconnects from the network, the use of other users is affected, and the tail fiber of the disconnected user has no location for storage, making it inconvenient to re-provision subsequent services.

In a first aspect, a flexible optical fiber management system is provided, comprising: a box body, which is successively divided into a first region, a connection region, and a second region from one side to the other side, and the connection region is located between the first region and the second region; the first region comprises a first mounting region configured to mount a first optical cable assembly and a first fiber splicing region configured to splice a first optical cable, and the first fiber splicing region is arranged corresponding to the first mounting region; the second region comprises a second mounting region configured to mount a second optical cable; and the connection region is configured to communicate the second optical cable with the first optical cable, wherein the connection region comprises a plurality of working positions configured to communicate the second optical cable with the first optical cable and a plurality of storage positions configured to place.

In some embodiments, the second region further comprises a second fiber splicing region configured to splice the second optical cable with a first tail fiber, and the second fiber splicing region is arranged corresponding to the second mounting region.

In some embodiments, the first mounting region and the second mounting region are mounted on a side wall of the box body, and the first mounting region and the second mounting region are located on the same side of the box body and are respectively located close to both ends of the box body.

In some embodiments, the second region is further provided with a third fiber blocking region and a fourth fiber blocking region, the third fiber blocking region and the fourth fiber blocking region are respectively located on opposite sides of the second fiber splicing region, the third fiber blocking region is configured to restrict the routing of the second optical cable, and the fourth fiber blocking region is configured to restrict the routing of the first tail fiber.

In some embodiments, the second region is further provided with a second storage reversing region, and an extending direction of the second storage reversing region is the same as that of the fourth fiber blocking region and are all parallel to the connection region.

In some embodiments, the connection region is equipped with an optical fiber adapter, the optical fiber adapter is provided with the working position that runs through both sides, one side of the working position faces the first region and is configured to connect the first optical cable, and the other side faces the second region and is configured to connect the second optical cable; and the storage position faces the second region and is configured to place the second optical cable.

In some embodiments, relative to the first fiber splicing region, the first mounting region is biased away from the connection region; the first fiber splicing region is provided with a second tail fiber, one end of the second tail fiber is spliced to the first optical cable in the first fiber splicing region, and the other end of the second tail fiber is connected to the working position; or, the first region is provided with a third mounting region, the third mounting region is equipped with an optical splitter, and one end of the optical splitter is provided with a first connection line, the other end is provided with a second connection line communicated with the first connection line; and the first connection line is spliced to the first optical cable in the first fiber splicing region, and the second connection line is connected to the working position.

In some embodiments, a first fiber blocking region is provided on the side of the first fiber splicing region away from the connection region, and the first fiber blocking region is configured to restrict the routing of the first optical cable; and a second fiber blocking region is provided on the side of the first fiber splicing region close to the connection region, and the second fiber blocking region is configured to restrict the routing of the second tail fiber or the routing of the first connection line.

In some embodiments, a first storage reversing region is provided on the side of the first fiber splicing region away from the first mounting region, and the first storage reversing region is configured to store or reverse the second tail fiber or the second connection line; and along the arrangement direction of the first region, the connection region and the second region, the first storage reversing region corresponds to one end of the connection region.

In some embodiments, the connection region is equipped with an optical fiber adapter, the optical fiber adapter is provided with the working position, and one side of the optical fiber adapter close to the first fiber splicing region extends obliquely toward the first storage reversing region.

In some embodiments, the first mounting region comprises: a first sealing module, which is mounted on a side wall of the box body, and the first sealing module is provided with a first channel for the first optical cable assembly to pass through; and a first fixing module, which is configured to fix the first optical cable assembly, the first fixing module is located inside the box body, and the first fixing module is provided with a second channel directly opposite to the first channel.

In some embodiments, the first mounting region further comprises: a microtube-to-microcable fixed sealing module, which is mounted in the box body, so that the first sealing module, the first fixing module and the microtube-to-microcable fixed sealing module are arranged successively from outside to inside, and the microtube-to-microcable fixed sealing module is configured to separate the first optical cable assembly.

In some embodiments, the second mounting region comprises a second sealing module, which comprises: a sealing component, which is provided with a third channel for the second optical cable to pass through; and a pressing block, which resists the top of the sealing component and allows the sealing component to seal the second optical cable.

In some embodiments, the second mounting region further comprises a second fixing module configured to fix the second optical cable; the second fixing module comprises a first module and a second module arranged in parallel, and a third module located between the first module and the second module, and the third module and the first module are arranged in a staggered manner.

In some embodiments, the connection region comprises: a working area module, which is arranged obliquely relative to the side wall of the box body, and the working area module is provided with the plurality of the work positions; and a storage area module, which is arranged obliquely relative to the side wall of the box body, and the storage area module is provided with the plurality of the storage positions.

In some embodiments, both the working area module and the storage area module comprise a base provided with a slideway groove and a clamping strip provided with a sliding shaft, the sliding shaft matches the slideway groove in a sliding manner, and the clamping strip of the working area module is provided with the working position, and the clamping strip of the storage area module is provided with the storage position.

In some embodiments, the connection region comprises: a plurality of adapter modules, which are arranged obliquely relative to a side wall of the box body, the plurality of the adapter modules are arranged in a row, each of the adapter modules is provided with a working area and a storage area, the working area is provided with at least one row of the working positions, and the storage area is provided with at least one row of the storage positions.

In a second aspect, a network access method of the flexible optical fiber management system is provided, comprising the following steps: performing sealing and fixing on the first optical cable assembly in the first mounting region; performing splicing on one end of the first optical cable in the first fiber splicing region so as to connect the first optical cable to the working position; performing sealing and fixing on the second optical cable in the second mounting region; placing one end of the second optical cable on the plurality of the storage positions in the connection region; judging whether user services need to be activated; and if so, deploying the second optical cable to the working position so as to communicate the second optical cable with the first optical cable.

In some embodiments, the step of performing splicing on one end of the first optical cable in the first fiber splicing region so as to connect the first optical cable to the working position comprises the following steps: judging whether an optical splitter is adopted in the application scenario; if so, adding the optical splitter to the first region, splicing the first connection line at one end of the optical splitter with the first optical cable, and connecting the second connection line at the other end of the optical splitter to the working position; and if not, adding a second tail fiber to the first region, splicing one end of the second tail fiber with the first optical cable, and connecting the other end of the second tail fiber to the working position.

In some embodiments, the connection region comprises a working area module provided with the working position and a storage area module provided with the storage position, and the step of placing one end of the second optical cable on the plurality of the storage positions in the connection region comprises the step of: placing one end of the second optical cable in the storage area module.

In some embodiments, the step of performing sealing and fixing on the first optical cable assembly in the first mounting region comprises the following steps: performing sealing on the first optical cable assembly through the first sealing module, and fixing the first optical cable assembly through the first fixing module located on one side of the first sealing module, so that one end of the first optical cable assembly passes through the first sealing module and the first fixing module successively; separating the first optical cable from the microtubes of the first optical cable assembly; and fixing a central reinforcing member or aramid yarn of the first optical cable.

In some embodiments, the step of performing sealing and fixing on the second optical cable in the second mounting region comprises the following steps: performing sealing on the second optical cable through the second sealing module, and fixing the second optical cable through the second fixing module located on one side of the second sealing module, so that one end of the second optical cable passes through the second sealing module and the second fixing module successively; and fixing a central reinforcing member or aramid yarn of the second optical cable.

In some embodiments, the second region further comprises a second fiber splicing region provided with a first tail fiber, and after the step of performing sealing and fixing on the second optical cable in the second mounting region, further comprising the following step: performing splicing on one end of the first tail fiber with one end of the second optical cable in the second fiber splicing region.

The beneficial effects of the technical solution provided in the present invention comprise:
The embodiments of the present invention provide a flexible optical fiber management system and a network access method, since a connection region is provided between the first mounting region and the second mounting region, and the connection region is provided with a plurality of working positions and a plurality of storage positions, one end of the first optical cable can be connected to one side of the working position, the second optical cable can be spliced to one end of the first tail fiber in the second fiber splicing region, and the other end of the first tail fiber can be placed on the storage position in the connection region, when a user service needs to be activated, the first tail fiber placed on the storage position can be directly inserted into the other side of the working position in the connection region to realize the communication between the first tail fiber and the first optical cable; and when the user service needs to be disconnected, the corresponding first tail fiber on the working position can be unplugged and inserted into the storage position, so there is no need to disconnect other users who are currently using the network, and the first tail fiber of the disconnected user can be stored in the adjacent storage position so as to facilitate the re-provisioning of subsequent services.

### Brief Description of the Drawings

In order to better illustrate the technical solution in the embodiments of the present application, the following will briefly introduce the drawings needed in the description of the embodiments, and it is obvious that the drawings in the following description are only a part of embodiments of the present application, for those of ordinary skill in the art, other drawings may also be obtained based on these drawings without any inventive effort.
Fig. 1 is a structural diagram of a flexible optical fiber management system in the embodiment of the present invention;
Fig. 2 is a perspective view of the first mounting region in the embodiment of the present invention;
Fig. 3 is another perspective view of the first mounting region in the embodiment of the present invention;
Fig. 4 is a structural diagram of the first sealing module in the embodiment of the present invention;
Fig. 5 is a structural diagram of the first sealing member in the embodiment of the present invention;
Fig. 6 is a schematic diagram of a fixing hook provided in the embodiment of the present invention;
Fig. 7 is a schematic diagram of a pressing block in the embodiment of the present invention;
Fig. 8 is a structural diagram of the first fixing module in the embodiment of the present invention;
Fig. 9 is a structural diagram of an upper clip in the embodiment of the present invention;
Fig. 10 is a structural diagram of a fixing base in the embodiment of the present invention;
Fig. 11 is a schematic diagram of a microtube-to-microcable fixed sealing module in the embodiment of the present invention;
Fig. 12 is a schematic diagram of the first reinforcement fixing platform in the embodiment of the present invention;
Fig. 13 is a structural diagram of the second mounting region in the embodiment of the present invention;
Fig. 14 is a schematic diagram of the second fixing module in the embodiment of the present invention;
Fig. 15 is a perspective view of a fixing member in the embodiment of the present invention;
Fig. 16 is another perspective view of a fixing member in the embodiment of the present invention;
Fig. 17 is a schematic diagram of an upper cover in the embodiment of the present invention;
Fig. 18 is a schematic diagram of a fixing member before sliding into a fixing plate in the embodiment of the present invention;
Fig. 19 is an exploded schematic diagram of the second sealing module in the embodiment of the present invention;
Fig. 20 is a cross-sectional view of the second sealing member in the embodiment of the present invention;
Fig. 21 is a combined structure diagram of the second sealing module in the embodiment of the present invention;
Fig. 22 is a schematic diagram of another fixing hook provided in the embodiment of the present invention;
Fig. 23 is a structural diagram of an adapter module in the embodiment of the present invention;
Fig. 24 is a structural diagram of a base in the embodiment of the present invention;
Fig. 25 is a structural diagram of a clamping strip of an adapter module in the embodiment of the present invention;
Fig. 26 is a structural diagram of a working area module in the embodiment of the present invention;
Fig. 27 is a structural diagram of a storage area module in the embodiment of the present invention;
Fig. 28 is a structural diagram of another clamping strip of an adapter module in the embodiment of the present invention;
Fig. 29 is a structural diagram of another adapter module in the embodiment of the present invention;
Fig. 30 is a structural diagram from another angle of a flexible optical fiber management system in the embodiment of the present invention.

In the figures:
1-base; 11-fixing hook; 111-elastic arm; 112-pinch portion; 113-protrusion; 114-binding hole; 115-arc-shaped mounting surface; 116-matching groove;
2-box cover;
3-the first mounting region; 31-the first sealing module; 311-the first channel; 312-filling layer; 313-easy-to-tear part; 314-the first sealing member; 3141-groove body; 315-pressing block;
32-the first fixing module; 321-the second channel; 322-fixing seat; 3221-bayonet; 323-lower clip; 324-upper clip; 3241-extension section; 3242-bayonet opening; 325-screw;
33-microtube-to-microcable fixed sealing module; 331-the fourth channel; 332-the fifth channel; 333-convex ring; 34-the first reinforcement fixing platform; 341-main body; 342-base body; 343- fastener; 344-through-hole;
4-the second mounting region; 41-the second sealing module; 411-sealing component; 4111-the third channel; 412-the second sealing member; 413-groove; 414-reinforcing plate; 415-convex block; 416-sealing plate;
42-the second fixing module; 421-fixing member; 422-upper cover; 423-clamping buckle; 424-fixing groove; 425-buckle groove; 426-sliding groove; 427-limiting groove; 428-convex point; 429-fixing plate; 43-the second reinforcement fixing platform; 44-the first module; 45-the second module; 46-the third module; 5-the second fiber splicing region; 51-the second fiber splicing tray;
6-connection region; 61-working position; 62-storage position; 63-working area module; 64-storage area module; 65-pedestal; 651-slideway groove; 652- bulge; 66- clamping strip; 661-sliding shaft; 662-mushroom head; 67- adapter module;
7-the second optical cable; 8-the first fiber splicing region; 81-the first fiber splicing tray;
A-the first region; B-the second region; C-the third mounting region; D-the first storage reversing region; E-the second storage reversing region; F-the first fiber blocking region; G-the second fiber blocking region; H-the third fiber blocking region; I-the fourth fiber blocking region.

### Detailed Description of the Embodiments

In order to make the purpose, technical solutions and advantages of the embodiments of the present invention clearer, the technical solutions in the embodiments of the present invention will be described clearly and completely in combination with the drawings in the embodiments of the present invention. Obviously, the described embodiments are only a part of the embodiments of the present invention, not all of the embodiments. Based on the embodiments in the present invention, all other embodiments obtained by a person of ordinary skill in the art without inventive efforts shall fall within the protection scope of the present invention.

The embodiment of the present invention provides a flexible optical fiber management system and a network access method, which can solve the problem in the related technologies that when a user disconnects from the network, the use of other users is affected, and the tail fiber of the disconnected user has no location for storage, making it inconvenient to re-provision subsequent services.

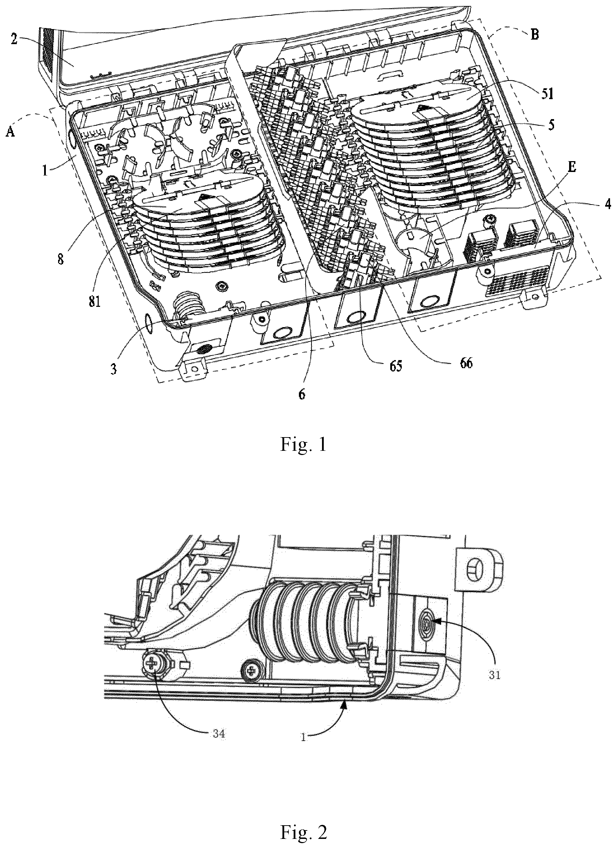

As shown in Figs. 1, 2, 13, 23 and 30, the embodiment of the present invention provides a flexible optical fiber management system, which can comprise a box body, the box body is successively divided into a first region A, a connection region 6, and a second region B from one side to the other side, and the connection region 6 is located between the first region A and the second region B. In this embodiment, the box body is preferably sealed, and the box body can comprise a base 1 and a box cover 2 located on one side of the base 1, and he box cover 2 is detachably connected to the base 1. In this embodiment, the first region A, the connection region 6 and the second region B are arranged inside the base 1, and the connection region 6 is located approximately in the middle of the base 1. The first region A can comprise a first mounting region 3, the first mounting region 3 is configured to mount a first optical cable assembly. In this embodiment, the first optical cable assembly comprises an outer air-blown microtube and a microcable located in the microtube (that is, the first optical cable). The first mounting region 3 is provided on one side of the base 1, and the first optical cable enters the base 1 through the first mounting region 3. The first region A can further comprise a first fiber splicing region 8 configured to splice the first optical cable, and the first fiber splicing region 8 is arranged corresponding to the first mounting region 3, that is to say, the first mounting region 3 is correspondingly arranged near the first splicing area 8, so that the first optical cable can be directly spliced in the first fiber splicing region 8 after entering the box body. The second region B can comprise a second mounting region 4, the second mounting region 4 is configured to mount a second optical cable 7, the second optical cable 7 can be a home-entry optical cable or an optical cable in the corridor, one end of the optical cable in the corridor can enter the box body, and the other end can be connected to the home-entry optical cable. In this embodiment, the second mounting region 4 is also mounted on the base 1, so that the first mounting region 3 and the second mounting region 4 are respectively located on opposite sides of the base 1, and the second optical cable 7 can enter the base 1 through the second mounting region 4 so as to facilitate the communication between the first optical cable and the second optical cable 7 in the base 1. The second region B further comprises a second fiber splicing region 5, which is configured to splice the second optical cable 7 with a first tail fiber. Specifically, one end of the second optical cable 7 can extend to the first splicing region, and the first splicing region can also be provided with the first tail fiber, one end of the first tail fiber can be spliced to the second optical cable 7 in the first splicing region so as to realize the communication between the first tail fiber and the second optical cable 7. The second fiber splicing region 5 is arranged corresponding to the second mounting region 4, that is to say, the second mounting region 4 is correspondingly arranged near the second fiber splicing region 5, so that the second optical cable 7 can be directly spliced in the second fiber splicing region 5 after entering the box body. The connection region 6 is configured to communicate the first tail fiber with the first optical cable, that is to say, the other end of the first tail fiber can be connected to the connection region 6, and one end of the first optical cable can also be directly or indirectly connected to the connection region 6, so that the first tail fiber and the first optical cable can be connected in the connection region 6. The connection region 6 can comprise a plurality of working positions 61 configured to communicate the second optical cable 7 with the first optical cable and a plurality of storage positions 62 configured to place, that is to say, when it is necessary to connect the first tail fiber to the first optical cable, the first tail fiber can be inserted into the working position 61, and when it is necessary to disconnect the first tail fiber from the first optical cable, the first tail fiber can be inserted into the storage position 62 so as to facilitate the provisioning and disconnection of the service. When the first tail fiber is not provided, a connector can be installed at the end of the second optical cable 7, and the second optical cable 7 can be directly installed on the working position 61 through the connector to communicate with the first optical cable, and when it is necessary to disconnect the service, the second optical cable 7 is placed on the storage position 62 together with the connector. The connection region 6 can be located between the first mounting region 3 and the second mounting region 4, and the second fiber splicing region 5 and the second mounting region 4 can be located on the same side of the connection region 6, so that the second optical cable 7 is spliced to the first tail fiber on the same side of the connection region 6 after entering the base 1. The second optical cable 7 does not need to extend a long distance within the base 1, the second optical cable 7 takes up less space in the base 1, and at the same time, the connection region 6 located in the middle allows the first optical cables and first tail fibers on both sides of the connection region 6 to be inserted into the opposite sides of the connection region 6 along the extension direction, so as to facilitate connecting the first tail fibers and the first optical cables to the connection region 6.

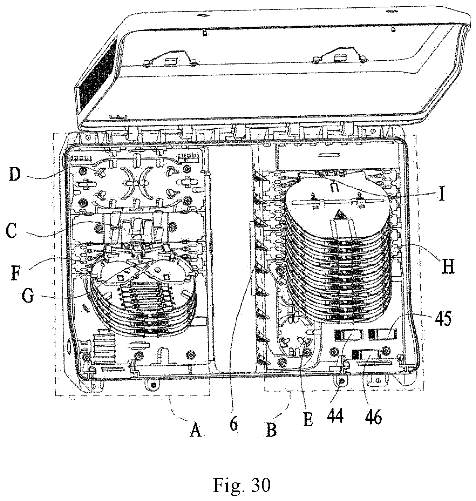

As shown in Fig. 1 and Fig. 30, in some embodiments, the base 1 can be provided with a first side wall, a second side wall, a third side wall and a fourth side wall. The four side walls are respectively located on the four sides of the base 1, the first side wall is directly opposite to the second side wall, the third side wall is directly opposite to the fourth side wall, the first side wall and the second side wall are connected by the third side wall, the first mounting region 3 and the second mounting region 4 are installed on the side wall of the base 1, and the first mounting region 3 and the second mounting region 4 are located on the same side of the box body. In this embodiment, the first mounting region 3 and the second mounting region 4 are both mounted on the first side wall of the base 1 and are respectively located close to the two ends of the box body. That is to say, the first mounting region 3 is located near the left end of the first side wall, and the second mounting region 4 is located near the right end of the first side wall, since the first mounting region 3 and the second mounting region 4 are located on the same side of the box body, when mounting the first optical cable assembly and the second optical cable 7, the user can stand on the same side of the box body, first mount the first optical cable assembly to the first mounting region 3, and then mount the second optical cable 7 to the second mounting region 4, and does not need to change the side to mount the second optical cable 7, which is convenient for the user to operate, and the first mounting region 3 and the second mounting region 4 are arranged at both ends, so that the first optical cable assembly and the second optical cable 7 enter from the end of the base 1, so that the connection region 6 is arranged in the middle of the base 1 to connect the first optical cable and the second optical cable 7.

As shown in Fig. 1 and Fig. 30, in some optional embodiments, relative to the first fiber splicing region 8, the first mounting region 3 is biased away from the connection region 6, that is to say, the first fiber splicing region 8 is closer to the connection region 6, and the first fiber splicing region 8 is located between the connection region 6 and the first mounting region 3. The first fiber splicing region 8 is provided with a second tail fiber, one end of the second tail fiber is spliced to the first optical cable in the first fiber splicing region 8, and the other end of the second tail fiber is connected to the working position 61, and since the first fiber splicing region 8 is located between the connection region 6 and the first mounting region 3, the first optical cable can enter the first fiber splicing region 8 from the left side of the first fiber splicing region 8 and be spliced to the second tail fiber, and the second tail fiber can come out from the right side of the first fiber splicing region 8 and reach the connection region 6, and the direction in which the second tail fiber extends from the first fiber splicing region 8 is toward the connection region 6 and can be connected to the connection region 6 along this direction.

As shown in Fig. 1 and Fig. 30, in some embodiments, relative to the first fiber splicing region 8, the first mounting region 3 is biased away from the connection region 6, that is to say, the first fiber splicing region 8 is closer to the connection region 6, and the first fiber splicing region 8 is located between the connection region 6 and the first mounting region 3. The first region A is provided with a third mounting region C, the third mounting region C and the first mounting region 3 are respectively located on opposite sides of the first fiber splicing region 8, that is to say, the third mounting region C is closer to the second side wall, the third mounting region C can be equipped with an optical splitter, one end of the optical splitter is provided with a first connection line, and the other end is provided with a second connection line communicated with the first connection line. In this embodiment, the first connection line and the second connection line are connected through a chip inside the optical splitter. The first connection line is spliced to the first optical cable in the first fiber splicing region 8, the second connection line is connected to the working position 61, through setting up an optical splitter, one optical fiber in the microcable can be divided into a plurality of channels and distributed to a plurality of optical fibers, and the optical splitter is arranged on the opposite side of the first mounting region 3 instead of between the first fiber splicing region 8 and the connection region 6 to avoid occupying the lateral space of the box body, and in this embodiment, the optical splitter and the connection region 6 are arranged vertically, that is to say, the optical splitter is disposed transversely in the base 1 to avoid occupying the vertical space of the base 1.

As shown in Fig. 1 and Fig. 30, in some embodiments, a first fiber blocking region F can be provided on the side of the first fiber splicing region 8 away from the connection region 6, the first fiber blocking region F is configured to restrict the routing of the first optical cable, that is to say, the first fiber blocking region F is located at the third side wall, and the first mounting region 3 is also located at one end close to the third side wall, so that after the first optical cable enters the box body from the first mounting region 3, the separated microcable can be extended forward into the first fiber blocking region F along the direction of entering the box body and then enters the first fiber splicing region 8 by passing through the outlet of the first fiber blocking region F, so during the process of entering the first fiber splicing region 8, the microcable does not need to be bent multiple times. A second fiber blocking region G is provided on the side of the first fiber splicing region 8 close to the connection region 6. That is to say, the second fiber blocking region G is located between the first fiber splicing region 8 and the connection region 6. The second fiber blocking region G is configured to constrain the routing of the second tail fiber or the first connection line, so that when the second tail fiber is used, the second tail fiber can extended from the first fiber splicing region 8 to the connection region 6 along a specific route to avoid the second tail fiber from being upturned or the wiring disorder, and when the optical splitter is used, the second fiber blocking region G can be configured to constrain the routing of the first connection line of the optical splitter.

As shown in Fig. 1 and Fig. 30, in some embodiments, a first storage reversing region D is provided on the side of the first fiber splicing region 8 away from the first mounting region 3, that is to say, the first storage reversing region D is also close to the second side wall and is arranged side by side with the first fiber splicing region 8. The first storage reversing region D is configured to store or reverse the second tail fiber or the second connection line, since the first storage reversing region D is provided, the redundant second tail fiber or second connection line can not only be wound in the first storage reversing region D, but also change direction in the first storage reversing region D. Along the arrangement direction of the first region A, the connection region 6, and the second region B, the first storage reversing region D corresponds to one end of the connection region 6, so that when a second tail fiber is used to connect the first optical cable, after coming out of the first storage reversing region D, the second tail fiber can be successively connected to the working position 61 from one end of the connection region 6 along the extension direction of the connection region 6, and when the optical splitter is used to connect the first optical cable, after the second connection line of the optical splitter comes out of the first storage reversing region D, the second connection line can be successively connected to the working position 61 from one end of the connection region 6 along the extension direction of the connection region 6.

As shown in Fig. 1 and Fig. 30, further, the connection region 6 is equipped with an optical fiber adapter, the optical fiber adapter is provided with the working position 61, the side of the optical fiber adapter close to the first fiber splicing region 8 extends obliquely toward the first storage reversing region D, that is to say, the optical fiber adapter is installed at an angle and faces the first storage reversing region D, and the second tail fiber or the second connection line can be directly plugged in a straight line toward direction of the optical fiber adapter after extending from the first storage reversing region D, which facilitates operation.

As shown in Fig. 1 and Fig. 30, further, the second region B can further be provided with a third fiber blocking region H and a fourth fiber blocking region I, and the third fiber blocking region H and the fourth fiber blocking region I are respectively located on opposite sides of the second fiber splicing region 5. In this embodiment, the third fiber blocking region H is located on the side close to the fourth side wall, the fourth fiber blocking region I is located on the side close to the connection region 6, the third fiber blocking region H is configured to constrain the routing of the second optical cable 7, the fourth fiber blocking region I is configured to constrain the routing of the first tail fiber, and through arranging the third fiber blocking region H, the second optical cable 7 entering from the second mounting region 4 can enter the third fiber blocking region H along the extension direction, and then enter the second fiber splicing region 5 from the third fiber blocking region H to be spliced to the first tail fiber, the other end of the first tail fiber can come out of the second fiber splicing region 5 and turn around to enter the fourth fiber blocking region I on the other side, the third fiber blocking region H and the fourth fiber blocking region I are arranged on opposite sides of the second fiber splicing region 5 along the transverse direction, which will not occupy the length of the base 1 in the longitudinal direction, and can ensure that the second optical cable 7 enters the third fiber blocking region H along the extension direction, so that the second optical cable 7 can be easily wound into the second fiber splicing region 5.

As shown in Fig. 1 and Fig. 30, further, the second region B can further be provided with a second storage reversing region E, the extension direction of the second storage reversing region E can be the same as that of the fourth fiber blocking region I, and both are parallel to the connection region 6. Specifically, the second storage reversing region E extends longitudinally, the fourth fiber blocking region I also extends longitudinally, the first tail fiber directly enters the fourth fiber blocking region I after coming out of the second fiber splicing region 5, and extends all the way back to the second storage reversing region E for storage or reversing, so that after the first tail fiber comes out of the second storage reversing region E, the extension direction thereof can be towards the connection region 6. Since the second storage reversing region E and the fourth fiber blocking region I extend in the same direction, the space between the fourth fiber blocking region I and the first side wall is made full use to form the second storage reversing region E, and the second storage reversing region E can convert the direction of the first tail fiber, so that the first tail fiber can be easily inserted into the connection region 6 after coming out of the second storage reversing region E. In this embodiment, the first fiber blocking region F, the second fiber blocking region G, the third fiber blocking region H and the fourth fiber blocking region I are all provided with fiber blocking sheets.

As shown in Fig. 1 and Fig. 30, further, the connection region 6 is equipped with an optical fiber adapter, the optical fiber adapter is provided with the working position 61 that runs through both sides, the side of the optical fiber adapter close to the second fiber splicing region 5 extends obliquely toward the second storage reversing area E, that is to say, the optical fiber adapter is arranged obliquely and toward the second storage reversing region E, so that one side of the working position 61 faces the first region A and configured to connect the first optical cable, the other side faces the second storage reversing region E and configured to connect the second optical cable 7, and at the same time, the storage position 62 also faces the second storage reversing region E, and is configured to place the second optical cable 7, the first tail fiber can be directly plugged into the working position 61 or the storage position 62 along a straight line toward the optical fiber adapter after extending from the second storage reversing region E, which facilitates operation. In this embodiment, both the first storage reversing region D and the second storage reversing region E are provided with reversing disks.

As shown in Figs. 2 to 5, further, the first mounting region 3 can comprise a first sealing module 31, and the first sealing module 31 can be provided with a first channel 311 for the first optical cable assembly to pass through, so that the first optical cable assembly can enter the base 1 through the first channel 311. In this embodiment, the first sealing module 31 is mounted on the side wall of the base 1. The first mounting region 3 can further comprise a first fixing module 32 configured to fix the first optical cable assembly, the first fixing module 32 is located on one side of the first sealing module 31, and the first fixing module 32 is provided with a second channel 321 directly opposite to the first channel 311. In this embodiment, the first fixing module 32 is located inside the base 1 close to the first sealing module 31, and the first fixing module 32 can be arranged directly opposite the first sealing module 31. The first optical cable assembly passes through the first channel 311, enters the second channel 321, and enters the base 1 from the second channel 321, and through setting the first sealing module 31, it is ensured that the first optical cable assembly is sealed when entering the base 1. The first sealing module 31 can seal around the first optical cable assembly, and at the same time, can also seal between the first sealing module 31 and the base 1 to prevent external water from entering the inside of the base 1 from the gap between the first optical cable assembly and the first sealing module 31 and the gap between the first sealing module 31 and the base 1, and through providing the first fixing module 32, the first optical cable assembly is further fixed after being sealed into the base 1.

As shown in Figs. 2 to 5, further, at least one layer of filling layer 312 is provided in the first channel 311, the filling layer 312 is in a cylindrical shape to facilitate the passage of the first optical cable and to protect the first optical cable assembly, and the radii of each filling layer 312 are not equal to each other, so that each filling layer 312 is arranged in a concentric structure according to the radius from small to large. Along the radial direction, two adjacent filling layers 312 are connected and sealed through an easy-to-tear part 313 to prevent dust or water vapor from entering the base 1, the first channel 311 and the outermost filling layer 312 are connected and sealed through an easy-to-tear part 313 to prevent dust or water vapor from entering the base 1. At the same time, the innermost filling layer 312 is also sealed through an easy-to-tear part 313 to prevent dust or water vapor from entering the base 1, during use, one or more filling layers 312 can be torn off according to the diameter size of the first optical cable assembly, thereby adapting to the first optical cable assembly with different diameter sizes, the easy-to-tear part 313 is used for connection and sealing, which can prevent dust or water vapor from entering the base 1 and avoid increasing the attenuation of the microcable and affecting the service life thereof. The present application has a simple structure and does not need to reproduce the first optical cable sealing module of various specifications.

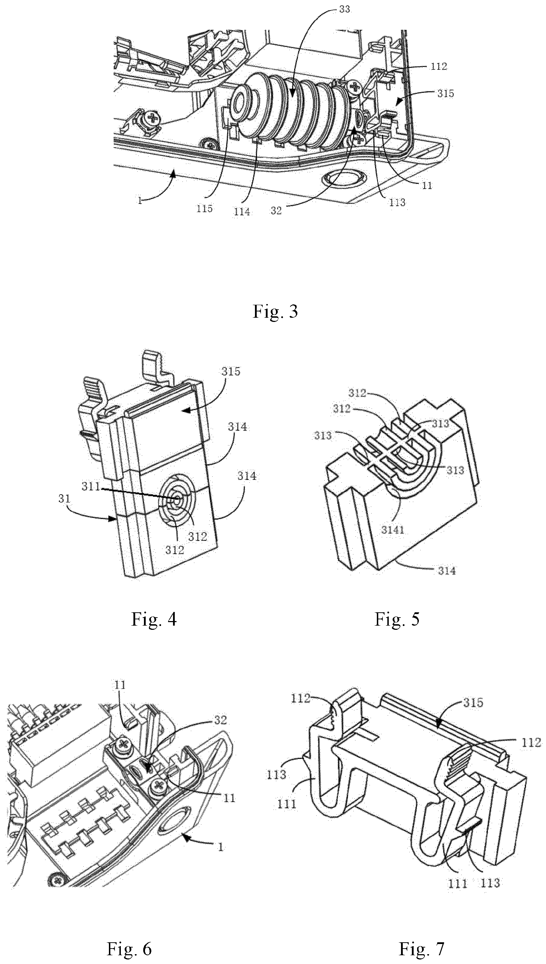

As shown in Figs. 4 and 5, in a preferred embodiment, the first sealing module 31 comprises two first sealing members 314, two first sealing members 314 are arranged in a stacked manner, the top surface of the first sealing member 314 located on the lower layer and the bottom surface of the first sealing member 314 located on the upper layer are both provided with groove bodies 3141, so that the first channel 311 is formed between the two first sealing members 314. The filling layer 312 comprises two filling units adapted to the two first sealing members 314, and the cross section of the filling unit is semicircular. This embodiment adopts a modular design, the two first sealing members 314 are stacked and assembled to achieve sealing, during actual construction, it is not only convenient to tear off one or more filling layers 312, but also facilitates the installation of the first optical cable assembly. Compared with the hole threading method, the construction efficiency of this embodiment is higher.

As shown in Fig. 3, Fig. 6 and Fig. 7, further, in a preferred embodiment, a fixing hook 11 is provided on the side wall of the base 1 corresponding to the first sealing module 31. The top of the first sealing module 31 is provided with a pressing block 315, the pressing block 315 is provided with an elastic arm 111, when the pressing block 315 is pressed down to the preset position, the elastic arm 111 is clamped into the fixing hook 11 to fix the first sealing module 31 on the side wall of the base 1. In order to fix the first sealing module 31 more firmly and to facilitate operation, two fixing hooks 11 are provided at intervals, and a space for the pressing block 315 to pass is formed between the two fixing hooks 11. The elastic arm 111 is provided with two, and is generally in a "U" shape, one end of which is connected to the pressing block 315, and the other end extends upward to be located above the pressing block 315 and forms a pinch portion 112, and the outer wall of the elastic arm 111 is also provided with a protrusion 113 configured to clamp the fixing hook 11 on its side. During operation, two fingers of one hand is used to press the two pinch portions 112 in the direction of approaching each other, so that the elastic arm 111 drives the protrusion 113 to move in the direction of approaching each other, when the pressing block 315 is pressed down to the preset position, the fingers are released, and the elastic arm 111 resets, at this time, the protrusion 113 is just clamp under the fixing hook 11, thereby preventing the pressing block 315 from moving upward, the pressing block 315 presses the first sealing member 314 at the top, further strengthening the sealing of the first optical cable assembly.

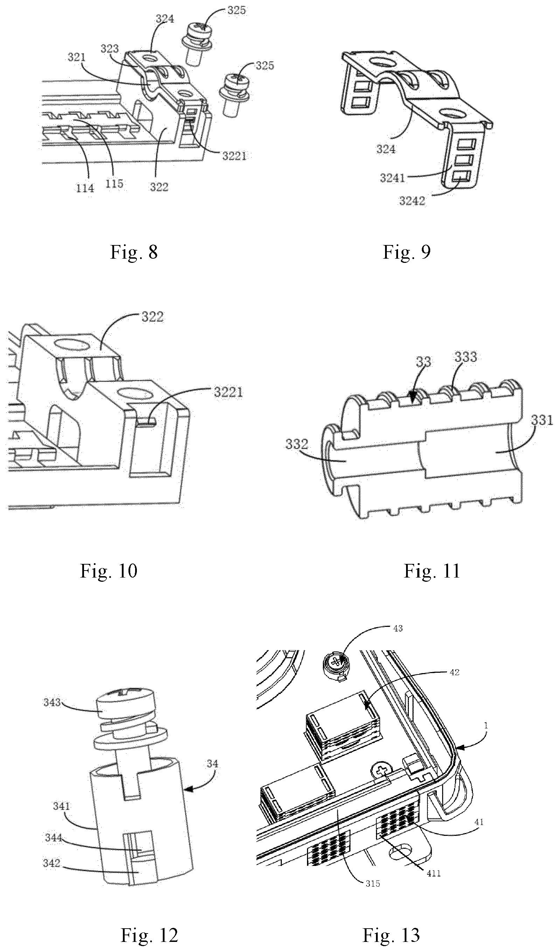

As shown in Figs. 8 to 10, in a preferred embodiment, the first fixing module 32 comprises a fixing seat 322, a lower clip 323 and an upper clip 324 arranged successively from bottom to top, the lower clip 323 and the upper clip 324 are screwed to the fixing seat 322 through screws 325, and the second channel 321 is formed between the lower clip 323 and the upper clip 324. During operation, the screw 325 is first unscrewed, the upper clip 324 is removed, and after the first optical cable assembly is put, the upper clip 324 is covered, and the screw 325 is tightened, and at the same time, the size of the second channel 321 can be adjusted through the depth of tightening the screw 325, so that the second channel 321 can be adapted to the first optical cable assemblies with different diameters.

As shown in Fig. 9 and Fig. 10, in a preferred embodiment, a bayonet 3221 is provided on the side wall of the fixing seat 322, one end of the upper clip 324 is bent vertically downward and forms an extension section 3241, the extension section 3241 is provided with a plurality of bayonet openings 3242 from top to bottom that are adapted to the bayonets 3221 to adjust the aperture of the second channel 321.

As shown in Fig. 3 and Fig. 11, in a preferred embodiment, the base 1 is provided with a binding hole 114 for the cable tie to pass through, the first mounting region 3 further comprises a microtube-to-microcable fixed sealing module 33, the microtube-to-microcable fixed sealing module 33 is fixed in the base 1 through the binding hole 114 with the cable tie, so that the first sealing module 31, the first fixing module 32 and the microtube-to-microcable fixed sealing module 33 are arranged successively from outside to inside. The microtube-to-microcable fixed sealing module 33 is configured to separate the first optical cable assembly, after the sealing of the first sealing module 31 and the fixing of the first fixing module 32, the first optical cable assembly can be fixed intact, and finally the microtube-microcable is separated to avoid the separated microcable from being damaged by external water. The microtube-to-microcable fixed sealing module 33 is provided with a fourth channel 331 for the optical cable assembly to pass in at one end close to the first sealing module 31; and the end of the microtube-to-microcable fixed sealing module 33 away from the first sealing module 31 is provided with a fifth channel 332 for the first optical cable to pass out, and the fourth channel 331 is communicated with the fifth channel 332. When designing the size of the microtube-to-microcable fixed sealing module 33, the diameter of the fourth channel 331 is preferably no larger than the diameter of the first optical cable assembly, so that the first optical cable assembly can be fixed and sealed, and the diameter of the fifth channel 332 is preferably no larger than the diameter of the first optical cable, so that the first optical cable can be fixed and sealed.

As shown in Fig. 3 and Fig. 11, in a preferred embodiment, the cross-section of the microtube-to-microcable fixed sealing module 33 is in a cylindrical shape, the base 1 is further provided with an arc-shaped mounting surface 115 that is adapted to the microtube-to-microcable fixed sealing module 33 so as to facilitate the positioning and fixation of the microtube-to-microcable fixed sealing module 33. The outer surface of the microtube-to-microcable fixed sealing module 33 forms a plurality of convex rings 333 extending in the circumferential direction, the convex rings 333 are arranged at intervals along the axial direction of the microtube-to-microcable fixed sealing module 33, and a placement region for binding the cable tie is formed between two adjacent convex rings 333, through the blocking effect of the convex rings 333, the cable tie is prevented from moving in the axial direction, so that the microtube-to-microcable fixed sealing module 33 is firmly fixed.

As shown in Fig. 2 and Fig. 12, in a preferred embodiment, the first mounting region 3 further comprises a first reinforcement fixing platform 34 for assembly in the base 1, the first reinforcement fixing platform 34 is configured to fix the central reinforcing member of the first optical cable. The first reinforcement fixing platform 34 comprises a main body 341, a base body 342 and a fastener 343. The body 341 is hollow, and the side wall thereof is provided with a through-hole 344 for the central reinforcing member to pass through; and base body 342 is assembled in the main body 341, and the fastener 4213 is screwed to the top of the main body 341 and is configured to resist and fix the central reinforcing member passing through the through-hole 344 to the base body 342. In the present application, the fastener 343 adopts a screw rod, through tightening the screw rod, the screw rod moves downward until the central reinforcing member is resisted and fixed on the base body 342.

As shown in Figs. 13 to 19, in some embodiments, the second mounting region 4 can comprise a second sealing module 41, which can comprise a sealing component 411, the sealing component 411 is provided with a third channel 4111 for the second optical cable 7 to pass through, so that the second optical cable 7 can enter the base 1 through the third channel 4111. In this embodiment, the sealing component 411 is mounted on the side wall of the base 1. The second sealing module 41 can further comprise a pressing block 315, which resists the top of the sealing component 411 so that the sealing component 411 seals the second optical cable 7, the structure of the pressing block 315 on the top of the sealing component 411 in this embodiment can be the same as that of the pressing block 315 on the top of the first sealing module 31, and at the same time, a fixing structure identical to the above-mentioned fixing hook 11 can also be provided on the side wall of the base 1 to match with the pressing block 315 to fix the sealing component 411. Through providing the second sealing module 41, it is ensured that the second optical cable 7 is sealed when entering the base 1, the second sealing module 41 can seal around the second optical cable 7, and at the same time, can further seal the second sealing module 41 and the base 1 to prevent external water from entering the inside of the base 1 from the gap between the second optical cable 7 and the second sealing module 41 and the gap between the second sealing module 41 and the base 1.

As shown in Figs. 13 to 19, the second mounting region 4 can further comprise a second fixing module 42 assembled in the base 1, the second fixing module 42 can comprise a first module 44 and a second module 45 arranged in parallel, and a third module 46 located between the first module 44 and the second module 45, and the third module 46 and the first module 44 can be arranged in a staggered position. In this embodiment, the third module 46 is biased close to the second sealing module 41, the third module 46 is arranged in a staggered position with the first module 44 and the second module 45 to avoid the problem of inconvenient operation of a plurality of modules crowded into the same position. In the present application, the structures of the first module 44, the second module 45 and the third module 46 can be the same, the first module 44 comprises a plurality of fixing members 421 and an upper cover 422, the fixing members 421 are arranged in a stacked manner, the top surface of the fixing member 421 is provided with a clamping buckle 423 and a fixing groove 424 configured to place the second optical cable 7, the bottom surface of the fixing member 421 is provided with a buckle groove 425 that matches the clamping buckle 423, the two adjacent fixing members 421 are fixed through the clamping buckle 423 and buckle groove 425, that is, the buckle groove 425 on the bottom surface of the upper fixing member 421 can match the clamping buckle 423 on the top surface of the lower fixing member 421. The upper cover 422 is also provided with the buckle groove 425 on the bottom surface. The upper cover 422 and the uppermost fixing member 421 are fixed through the buckle groove 425 of the upper cover 422 and the clamping buckle 423 of the fixing member 421. The second fixing module 42 configured to fix the second optical cable 7 in the present application adopts a modular stack design, starting from the lowermost fixing member 421, after the second optical cable 7 is placed, the fixing member 421 of the upper layer is mounted, the arrangement of the second optical cable 7 and the installation of the fixing members 421 are successively arranged, and finally, the upper cover 422 is mounted on the uppermost fixing member 421 to complete the fixing of all the second optical cables 7 without the need for binding and fixing, and the operation is simple and convenient. At least one second optical cable 7 can be placed on each fixing member 421, only the fixing member 421 of the upper layer needs to be mounted to fix all the second optical cables 7 on the fixing member 421 of the current layer at one time, compared to bundling optical cables one by one, it is more efficient and saves time and effort. The present application adopts a modular design, which can facilitate the stacking and expansion of the number of the fixing members 421, is conducive to increasing the density of optical cables, and is suitable for fixing the optical cables with multiple cores. The number of the fixing grooves 424 can be set according to actual needs, and the number of the fixing grooves 424 on each fixing member 421 can be the same or different, from bottom to top, the numbers of the fixing grooves 424 are 1, 2, 4 and 4 respectively, so the number of the fixing grooves 424 is not limited herein and can be set according to requirements.

On the same fixing member 421, the apertures of each fixing groove 424 can be the same or different. On the different fixing members 421, the apertures of the fixing grooves 424 can be the same or different. From bottom to top, the apertures of the fixing grooves 424 on each fixing member 421 gradually decrease. The aperture of the fixing groove 424 can be set according to actual requirements and is not limited herein.

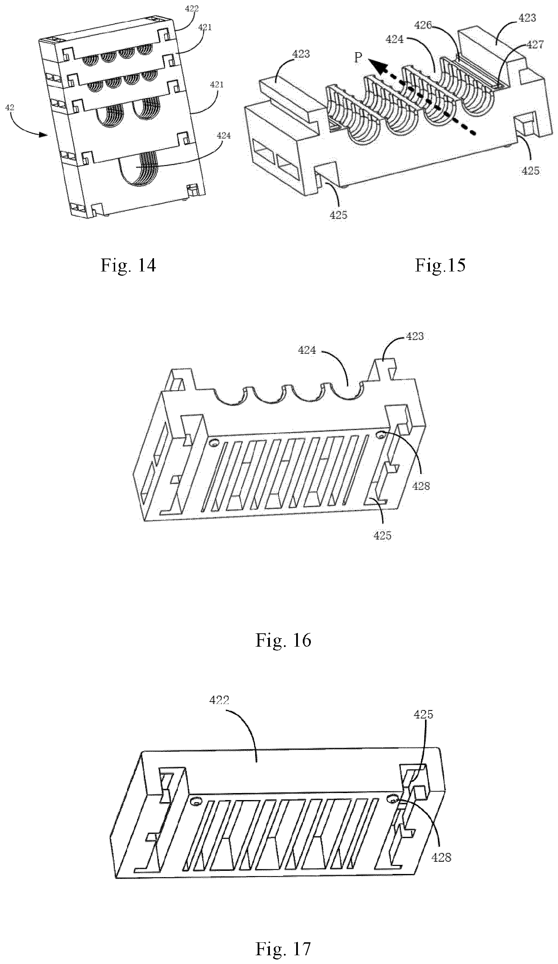

As shown in Fig. 15, in a preferred embodiment, the cross section of the clamping buckle 423 is in a "L" shape, and the clamping buckle 423 is slidably connected to the buckle groove 425 to facilitate the disassembly and assembly of the two fixing members 421. Each fixing member 421 is provided with two clamping buckles 423 on the top surface and two buckle grooves 425 on the bottom surface, which can make the assembled two fixing members 421 more stable.

As shown in Figs. 15 to 17, in a preferred embodiment, the top surface of the fixing member 421 is further provided with a sliding groove 426, there is a limiting groove 427 at the end of the sliding groove 426, the bottom surface of the fixing member 421 and the bottom surface of the upper cover 422 are both provided with convex points 428 that match the sliding groove 426; and when the convex point 428 slides to the end of the sliding groove 426 along the sliding groove 426, the convex point 428 is limited to the limiting groove 427 so as to fix the two adjacent fixing members 421, or fix the upper cover 422 and the uppermost fixing member 421 to achieve stacked fixation to prevent looseness between the two.

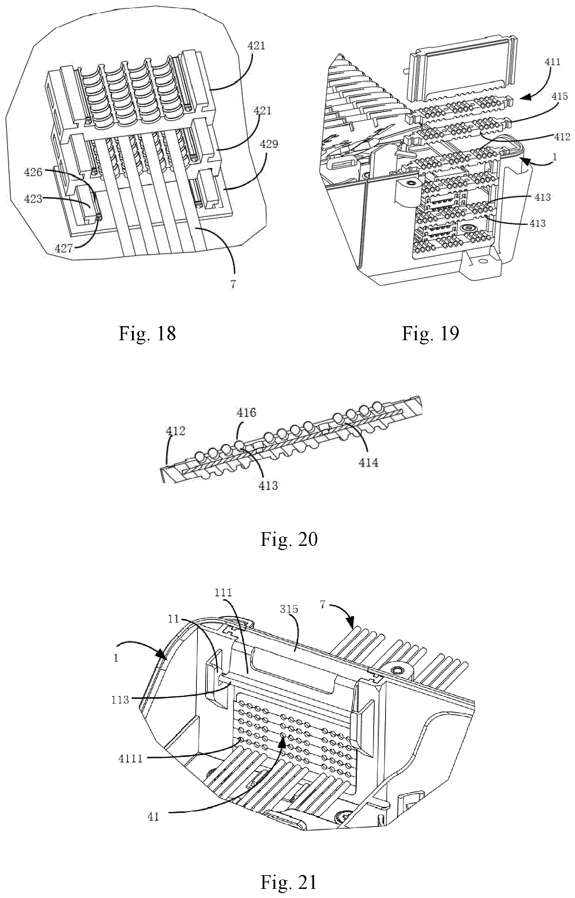

As shown in Fig. 18, in the present application, the first module 44 further comprises a fixing plate 429, the top surface structure of the fixing plate 429 can be substantially the same as that of the fixing member 421 so as to provide a universal interface, so that the lowermost fixing member 421 can be connected to the clamping buckle 423 on the top surface of the fixing plate 429 through the buckle groove 425, and the convex point 428 on the bottom surface of the fixing member 421 can enter the limiting groove 427 through the sliding groove 426 on the top surface of the fixing plate 429.

As shown in Fig. 15, in a preferred embodiment, along the insertion direction P of the second optical cable 7, the depth of the fixing groove 424 gradually becomes larger, so that after the second optical cable 7 is inserted into the fixing groove 424 of the fixing member 421 of the lower layer, along the opposite direction of the insertion direction P of the second optical cable 7, during the process of sliding the fixing member 421 of the upper layer into the clamping buckle 423 of the fixing member 421 of the lower layer, the fixing member 421 of the upper layer can close the fixing groove 424 on the fixing member 421 of the lower layer and gradually compress the second optical cable 7 until the convex point 428 enters the limiting groove 427, thereby achieving the fixation of the second optical cable 7, each fixing groove 424 is correspondingly fixed with one second optical cable 7, so that the second optical cable 7 is in direct contact with the fixing member 421, and the fixation is tight, and the problems of stretching slippage and unqualified pulling force are less likely to occur.

As shown in Fig. 13, in a preferred embodiment, the second sealing module 41 and the second fixing module 42 are arranged correspondingly. The sealing component 411 comprises a plurality of second sealing members 412, the second sealing members 412 are arranged in a stacked manner, in order to ensure the sealing effect, the second sealing member 412 is made of a certain elastic material, such as rubber. The top surface and the bottom surface of the second sealing member 412 are both concave with grooves 413, so that a third channel 4111 for the second optical cable 7 to pass through is formed between two adjacent second sealing members 412. Specifically, the grooves 413 on the bottom surface of the second sealing member 412 of the upper layer is combined with the grooves 413 on the top surface of the second sealing member 412 of the lower layer to form the third channel 4111, in this embodiment, the cross section of the groove 413 is semicircular, so that the cross section of the entire third channel 4111 is a circle that matches the second optical cable 7. Since the second sealing members 412 are stacked in multiple layers, the upper layer of the second sealing member 412 can be installed after one layer of the second optical cable 7 is installed, the second optical cables 7 are put into the grooves 413 on the top surface of the second sealing member 412, the second optical cables 7 mounted below will not block the second optical cables 7 being installed, which facilitates the installation of the second optical cables 7, and the perforation method of the second optical cables 7 is easy to operate, and at the same time, since each second optical cable 7 corresponds to one third channel 4111, the sealing of a single second optical cable 7 can be completely realized.

The number of the fixing members 421 on the first module 44 and the aperture and number of the fixing grooves 424 on the fixing member 421 correspond to the number of the second sealing members 412 on the second sealing module 41 and the aperture and number of the third channels 4111, so that the second fixing module 42 and the second sealing module 41 can match optical cables of various specifications.

As shown in Fig. 20, in some preferred embodiments, the second sealing member 412 is embedded with a reinforcing plate 414, the reinforcing plate 414 can ensure the overall rigidity of the second sealing member 412, and will not be too soft due to the narrow width of the second sealing member 412, since the main material of the second sealing member 412 is rubber with good elasticity, the outer ring of the second sealing member 412 still has good elasticity, and the reinforcing plate 414 can be made of metal material, etc.

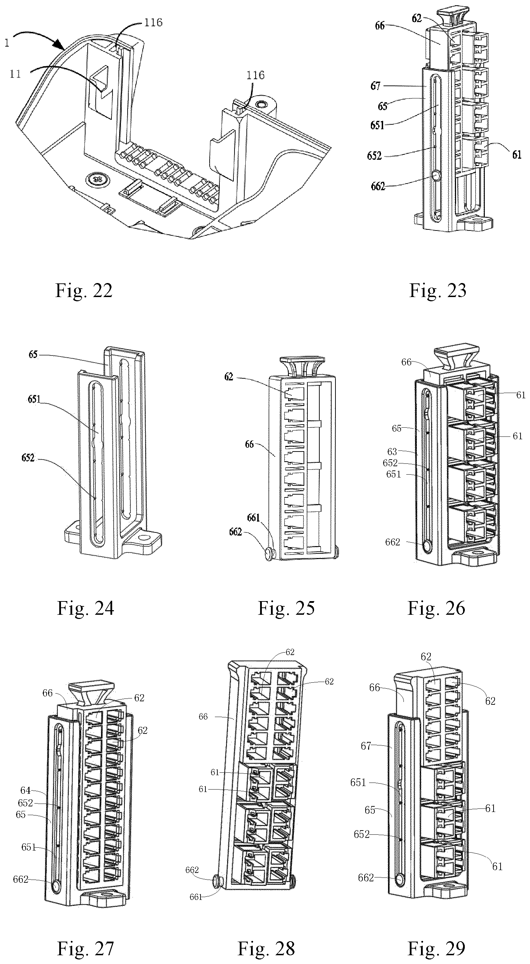

As shown in Fig. 19 and Fig. 22, the base 1 is provided with a matching groove 116 corresponding to the second sealing module 41, and the convex blocks 415 are provided at opposite ends of the second sealing member 412, the convex block 415 is clamped in the matching groove 116 and tightly matches with the matching groove 116, in this embodiment, the convex block 415 is in a "T" shape, so that the convex block 415 forms a waterway labyrinth on the side, the water on the outside of the base 1 needs to make a plurality of turns along the outer contour of the convex block 415 to enter the inside of the base 1, and further block the water on the side to ensure that water will not enter the inside of the base 1. In other embodiments, the convex block 415 is not limited to a T-shaped structure.

As shown in Fig. 20 and Fig. 21, in some preferred embodiments, several sealing plates 416 are provided in the third channel 4111, and the sealing plates 416 can be integrally formed with the second sealing member 412, when the second optical cables 7 are threaded, the sealing plates 416 can be torn off, and when the second optical cables 7 are not threaded, the sealing plate 416 can prevent water vapor and dust from entering the base 1.

As shown in Fig. 13, in a preferred embodiment, the second mounting region 4 can further comprise a second reinforcement fixing platform 43 assembled in the base 1; and along the insertion direction of the second optical cable 7, the second reinforcement fixing platform 43 is located downstream of the second fixing module 42 and is configured to fix the central reinforcing member of the second optical cable 7. The structure of the second reinforcement fixing platform 43 can be the same as that of the above-mentioned first reinforcement fixing platform 34.

As shown in Fig. 1, Fig. 26 and Fig. 27, in some embodiments, the connection region 6 can comprise an obliquely arranged working area module 63, the working area module 63 is provided with a plurality of working positions 61. In this embodiment, the working area module 63 can be arranged obliquely relative to the first side wall of the base 1, and the incline angle can range from 15° to 135°, so that the working area module 63 in the lateral direction of the base 1 occupies less space, and in this embodiment, a row of working area modules 63 is arranged approximately in the middle of the base 1, the incline direction of each working area module 63 is the same, and all the working positions 61 are arranged on each working area module 63, the plurality of the working positions 61 are arranged successively on the working area module 63 along the height direction of the working area module 63. The connection region 6 can further comprise a storage area module 64 arranged at an angle, and the storage area module 64 is provided with a plurality of storage positions 62. In this embodiment, the incline direction of the storage area module 64 can be the same as that of the working area module 63, and the storage area module 64 and the working area module 63 are arranged on the same straight line, the storage positions 62 are all arranged on the storage area module 64, the plurality of the storage positions 62 are arranged successively on the storage area module 64 along the height direction of the storage area module 64. In this embodiment, a plurality of working area modules 63 are arranged successively, and a plurality of the storage area modules 64 are arranged successively, the storage area modules 64 are located on the adjacent side of the working area modules 63, so that the first tail fibers on the working positions 61 on all the working area modules 63 can be inserted into the storage positions 62 on all the storage area modules 64. The operator does not need to choose and select the storage position 62, and plugging and unplugging the first tail fibers is freer and more flexible. In other embodiments, the working area modules 63 can also be arranged at intervals from the storage area modules 64, that is, one working area module 63, one storage area module 64, and then one working area module 63 and one storage area module 64, arranged successively.

As shown in Fig. 24 to Fig. 26, in some optional embodiments, the working area module 63 and the storage area module 64 both comprise a pedestal 65 provided with a slideway groove 651 and a clamping strip 66 provided with a sliding shaft 661, the sliding shaft 661 matches the slideway groove 651 in a sliding manner, so that the clamping strip 66 can slide relative to the pedestal 65. In this embodiment, the pedestal 65 can be fixed to the base 1 through screws 325, the slideway groove 651 is preferably in an annular shape, and in other embodiments, the slideway groove 651 can also be designed into other shapes according to specific circumstances, since the slideway groove 651 is a closed annular shape, it can ensure that the clamping strip 66 will not be pulled out with force and tear the optical fiber during the up and down pulling process. The clamping strip 66 of the working area module 63 is provided with the working position 61, in this embodiment, the working position 61 is formed through installing an optical fiber adapter on the clamping strip 66, one optical fiber adapter is provided with two corresponding working positions 61, the clamping strip 66 of the storage area module 64 is provided with the storage position 62, through pulling the clamping strip 66, the clamping strip 66 can be moved relative to the pedestal 65, and at the same time, after pulling the clamping strip 66 out of the pedestal 65, it is convenient to install the tail fiber on the clamping strip 66, and after the tail fiber is mounted, the clamping strip 66 is pulled into the pedestal 65.

As shown in Fig. 25, further, in this embodiment, the pedestal 65 is provided with an inner cavity, vertical slideway walls are set on opposite sides of the inner cavity, the slideway groove 651 is arranged on the slideway wall in a vertical state, the clamping strip 66 can be received in the inner cavity of the pedestal 65, the sliding shaft 661 can be provided with a mushroom head 662. In this embodiment, the mushroom head 662 is provided at the outer end of the sliding shaft 661, the outer contour size of the mushroom head 662 is larger than the diameter of the sliding shaft 661, so that the sliding shaft 661 is not easy to fall off after being inserted into the slideway groove 651. At the same time, during the process of installing the clamping strip 66 into the pedestal 65, the slideway wall of the pedestal 65 is slightly stretched, when the mushroom head 662 on the clamping strip 66 moves to the maximum width of the slideway groove 651, the slideway wall is pressed, so that the mushroom head 662 pops out from the inside of the slideway wall, and the mushroom head 662 passes through the slideway groove 651, so that the sliding shaft 661 enters the slideway groove 651, thus realizing the installation of the clamping strip 66 and the pedestal 65, and after installation, the sliding shaft 661 can slide freely in the slideway groove 651.

As shown in Fig. 26 and Fig. 27, in some embodiments, a plurality of bulges 652 are provided in the slideway groove 651 at intervals along the longitudinal direction of the slideway groove 651, and the width of the slideway groove 651 at the bulge 652 can be smaller than the outer diameter of the sliding shaft 661, so that the sliding shaft 661 can achieve the limit hovering function when passing through the bulge 652, the plurality of the bulges 652 are provided in the slideway groove 651 for limiting, ensuring that each clamping strip 66 can hover at the minimum pulling height.

As shown in Figs. 23 to 25 and Figs. 28 to 29, in some embodiments, the connection region 6 can comprise an obliquely arranged adapter module 67. The adapter module 67 can be configured with multiple, in this embodiment, the adapter modules 67 are also arranged in a row in the middle of the base 1, and the incline direction of the adapter module 67 can be the same as that of the above-mentioned working area module 63, in this embodiment, each adapter module 67 is provided with a working area and a storage area, the working area is provided with the working positions 61, and the storage area is provided with the storage positions 62, the working positions 61 can be arranged in a row along the height direction of the adapter module 67, and the storage positions 62 can also be arranged in a row along the height direction of the adapter module 67. Each working position 61 corresponds one-to-one with the storage position 62 located adjacent to it, since the working position 61 and the storage position 62 are arranged in one-to-one correspondence, the storage position 62 is located adjacent to the working position 61. When inserting and unplugging tail fibers on each pair of the working positions 61 and the storage positions 62, there is basically no need to adjust the length of the tail fiber, and it can easily start and stop the corresponding user services, which is conducive to the provisioning or disconnection maintenance of network services. The working positions 61 and storage positions 62 on each adapter module 67 can also be distributed along the height direction of the adapter module 67, that is, along the height direction of the adapter module 67, the working positions 61 are all located on the upper part of the adapter module 67, and the storage positions 62 are all located on the lower part of the adapter module 67, or the working positions 61 are all located at the lower part of the adapter module 67, and the storage positions 62 are all located at the upper part of the adapter module 67, and the working positions 61 and the storage positions 62 are arranged in directions away from each other, that is, the plurality of the working positions 61 are arranged successively along the height direction, the plurality of the storage positions 62 are also arranged successively along the height direction, so that the adapter module 67 can achieve efficient space utilization in the height direction. In this embodiment, the structure of the adapter module 67 can also be roughly the same as that of the above-mentioned working area module 63, that is to say, the adapter module 67 can also be designed in a structural form in which the pedestal 65 and the clamping strip 66 are slidably matched, so that the clamping strip 66 can be pulled out.

As shown in Fig. 1, in some embodiments, the base 1 can also be fixedly provided with a fiber coiling column, and the fiber coiling column can be located on one side of the adapter module 67. The fiber coiling column is configured to wind the excess first tail fiber, through arranging the fiber coiling column on the adjacent side of the adapter module 67, when the length of the first tail fiber is long, part of the first tail fiber can be wound around the fiber coiling column, so that a plurality of first tail fibers in the large-core optical cable distribution box are more organized.

As shown in Fig. 1, further, the second fiber splicing region 5 can comprise a second fiber splicing tray 51, the second fiber splicing tray 51 can be provide with a first splicing region, one end of the first tail fiber can be wound on the second fiber splicing tray 51 and placed on one side of the first splicing region, one end of the second optical cable 7 can also be wound on the second fiber splicing tray 51 and placed on the other side of the first splicing region, so that the second optical cable 7 can be spliced to the first tail fiber in the second fiber splicing region 5.

As shown in Fig. 1, in some optional embodiments, the first fiber splicing region 8 is provided with a first fiber splicing tray 81, the first fiber splicing tray 81 and the second fiber splicing tray 51 are respectively provided on opposite sides of the connection region 6, the first fiber splicing tray 81 can be provided with a second tail fiber, so that the first optical cable can be spliced to the second tail fiber on the first fiber splicing tray 81, and the second tail fiber can be connected to the first tail fiber, and the first tail fiber and the second tail fiber can be respectively inserted into the opposite sides of the working position 61 on the adapter module 67 for connecting, when using it, the user can directly move the first tail fiber that needs to work from the storage position 62 to the corresponding working position 61, when the user service is disconnected, the first tail fiber on the corresponding working position 61 is moved to the corresponding storage position 62, which provides operational convenience for the use of the high-density second optical cable 7.

In some embodiments, the flexible optical fiber management system can also comprise an optical splitter, the optical splitter can be arranged on the side of the connection region 6 away from the second fiber splicing region 5, so that one end of the microcable can be spliced to one end of the optical splitter, the other end of the optical splitter can be connected to the working position 61 so as to realize the communication between the first optical cable and the first tail fiber through the optical splitter, and through setting up the optical splitter, one optical cable of the microcable can be divided into multiple channels.

The embodiment of the present invention further provides a network access method, the network access method can be implemented using any embodiment of the above flexible optical fiber management system, and the network access method can comprise the following steps.

S 1 : Sealing and fixing is performed on the first optical cable assembly in the first mounting region 3.

Further, the first mounting region 3 can comprise a first sealing module 31, and the first sealing module 31 is provided with a first channel 311 for the first optical cable assembly to pass through; and the first mounting region 3 can further comprise a first fixing module 32 configured to fix the first optical cable assembly, the first fixing module 32 is located on one side of the first sealing module 31, and the first fixing module 32 is provided with a second channel 321 directly opposite to the first channel 311. In S 1, sealing and fixing are performed on the first optical cable assembly in the first mounting region 3, which can comprise the following steps: the sealing is performed on the first optical cable assembly through the first sealing module 31, and the first optical cable assembly is fixed through the first fixing module 32, so that one end of the first optical cable assembly passes through the first channel 311 of the first sealing module 31 and the second channel 321 of the first fixing module 32 successively; then, the first optical cable assembly can be separated in the microtube-to-microcable fixed sealing module 33, and the microcable (that is, the first optical cable) can be separated from the first optical cable assembly; and then, the reinforcement fixing platform located in the first mounting region 3 is adopted to fix the central reinforcing member or aramid yarn of the microcable.

S2: Splicing is performed on one end of the first optical cable in the first fiber splicing region 8 so as to connect the first optical cable to the working position 61.

In some embodiments, in S2, the first connector can be directly mounted on one end of the first optical cable, the first connector can be connected to the optical fiber adapter corresponding to the working position 61, and one end of the first optical cable is directly connected to the first tail fiber or the second optical cable 7, thereby reducing the loss between the first optical cable and the first tail fiber or the second optical cable 7.

In some optional embodiments, in S2, splicing is performed on one end of the first optical cable in the first fiber splicing region 8 so as to connect the first optical cable to the working position 61, which can comprise the following steps: whether an optical splitter is adopted in the application scenario is judged; if so, the optical splitter is added to the first region A, that is to say, the optical splitter splices one end of the microcable to the first connection line at one end of the optical splitter, and connects the second connection line at the other end of the optical splitter to the working position 61, and the optical splitter divides one optical cable into a plurality of channels and then connects these channels to the working position 61, thereby connecting the first optical cable to the working position 61 through the optical splitter; otherwise, the second tail fiber is added on the side of the connection region 6 away from the first tail fiber, and the first optical cable is connected to the working position 61 through the second tail fiber, that is to say, a first fiber splicing tray 81 can be set between the first mounting region 3 and the connection region 6, the microcable and one end of the second tail fiber are spliced on the first fiber splicing tray 81, and then the other end of the second tail fiber is connected to the working position 61.

S3: Sealing and fixing are performed on the second optical cable 7 in the second mounting region 4.

In some embodiments, the second mounting region 4 comprises a second sealing module 41, the second sealing module 41 comprises a sealing component 411, and the sealing component 411 is provided with a third channel 4111 for the second optical cable 7 to pass through; and the second mounting region 4 further comprises a pressing block 315, and the pressing block 315 resists the top of the sealing component 411 and allows the sealing component 411 to seal the second optical cable 7. Sealing and fixing are performed on the second optical cable 7 in the second mounting region 4 located on one side of the first mounting region 3, which can comprise the following steps: the second optical cable 7 is sealed through the sealing component 411, and the sealing component 411 is fixed through the pressing block 315, and the second optical cable 7 is fixed through the second fixing module 42 located on one side of the second sealing module 41 so as to make one end of the second optical cable 7 pass through the third channel 4111 of the second sealing module 41 and the fixing groove 424 of the second fixing module 42 successively and enter the base 1; and then, the reinforcement fixing platform located in the second mounting region 4 is adopted to fix the central reinforcing member or aramid yarn of the second optical cable 7.

In some optional embodiments, the second region B further comprises a second fiber splicing region 5 configured to splice the second optical cable 7 with the first tail fiber, the second fiber splicing region 5 is arranged corresponding to the second mounting region 4, after S3, one end of the first tail fiber can be spliced to one end of the second optical cable 7 in the second fiber splicing region 5, so that the second optical cable 7 can be communicated with the first optical cable through the first tail fiber, in other embodiments, a connector can also be directly mounted on one end of the second optical cable 7 so that the second optical cable 7 is directly inserted into the working position 61 and connected with the first optical cable.

S5: One end of the second optical cable 7 is placed on a plurality of storage positions 62 in the connection region 6.

Further, the connection region 6 comprises a working area module 63 provided with the working position 61 and a storage area module 64 provided with the storage position 62, and the other end of the first tail fiber is placed on the plurality of the storage positions 62 in the connection region 6, which can comprise: one end of the second optical cable 7 or the first tail fiber is placed on the storage area module 64, specifically, the storage area module 64 can be added to the connection region 6 according to requirements, when the first tail fiber is not provided in the second region B, the connector can be directly mounted at one end of the second optical cable 7, and the second optical cable 7 is placed on the storage area module 64 in an unused state, and when the second region B is provided with a first tail fiber, and one end of the first tail fiber is spliced to the second optical cable 7, a second connector can be mounted at the other end of the first tail fiber, and the first tail fiber can be placed on the storage area module 64 in an unused state.

S6: Whether user services need to be activated is judged.

S7: If so, the second optical cable 7 or the first tail fiber is deployed to the working position 61 to communicate the second optical cable 7 with the first optical cable, that is to say, when the user needs to activate network services and the first tail fiber is not set up in the second region B, the second optical cable 7 can be directly moved from the storage position 62 to the working position 61, so that the second optical cable 7 can be directly connected to the first optical cable; when the user needs to activate network services and the second region B is equipped with the first tail fiber, the first tail fiber can be moved from the storage position 62 to the working position 61, so that the first tail fiber can be directly connected to the first optical cable; and when the user needs to activate network services, and the first region A is equipped with the second tail fiber, and the second region B is equipped with the first tail fiber, the first tail fiber can be connected to the second tail fiber, and through communicating the second tail fiber with the first optical cable, the first tail fiber or the second optical cable 7 does not need to disconnect other users who are using the network when plugging or unplugging, which is conducive to provisioning and disconnecting services.

The principle of a flexible optical fiber management system and a network access method is as follows:
Since a connection region 6 is provided between the first mounting region 3 and the second mounting region 4, and the connection region 6 is provided with a plurality of working positions 61 and a plurality of storage positions 62, one end of the first optical cable can be connected to one side of the working position 61, the second optical cable 7 can be spliced to one end of the first tail fiber in the second fiber splicing region 5, and the other end of the first tail fiber can be placed on the storage position 62 in the connection region 6, when a user service needs to be activated, the first tail fiber placed on the storage position 62 can be directly inserted into the other side of the working position 61 in the connection region 6 to realize the communication between the first tail fiber and the first optical cable, and when the service of the user needs to be disconnected, the corresponding first tail fiber on the working position 61 can be unplugged and inserted into the storage position 62, so there is no need to disconnect other users who are currently using the network, and the first tail fiber of the disconnected user can be stored in the adjacent storage position 62 so as to facilitate the re-provisioning of subsequent services. At the same time, since the connection region 6 is located between the first mounting region 3 and the second mounting region 4, and the second fiber splicing region 5 and the second mounting region 4 are located on the same side of the connection region 6, so that the second optical cable 7 is spliced to the first tail fiber on the same side of the connection region 6 after entering the base 1. The second optical cable 7 does not need to extend a long distance within the base 1, the second optical cable 7 takes up less space in the base 1, and at the same time, the connection region 6 located in the middle allows the first optical cables and first tail fibers on both sides of the connection region 6 to be inserted into the opposite sides of the connection region 6 along the extension direction, so as to facilitate connecting the first tail fiber and the first optical cable to the connection region 6.

In the description of the present invention, it should be noted that the orientation or positional relationship indicated by the terms "upper", "lower", etc. are based on the orientation or positional relationship shown in the drawings, which is only for the convenience of describing the present invention and simplifying the description, instead of indicating or implying that the pointed device or element must have a specific orientation, be configured and operated in a specific orientation, therefore it may not be understood as a limitation of the present invention. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application may be understood according to specific circumstances.

It should be noted that relational terms such as "first" and "second" are only for distinguishing one entity or operation from another entity or operation in this the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present invention, so that those skilled in the art may understand or implement the present invention. For those skilled in the art, various modifications to these embodiments will be obvious, and the general principles defined herein may be implemented in other embodiments without departing from the spirit or scope of the present invention. Therefore, the present invention will not be limited to the embodiments shown in this document, but will be subject to the widest scope consistent with the principles and novel features applied herein.

## Claims

1. A flexible optical fiber management system, comprising:
a box body, which is successively divided into a first region (A), a connection region (6), and a second region (B) from one side to the other side, and the connection region (6) is located between the first region (A) and the second region (B);
the first region (A) comprises a first mounting region (3) configured to mount a first optical cable assembly and a first fiber splicing region (8) configured to splice a first optical cable, and the first fiber splicing region (8) is arranged corresponding to the first mounting region (3); the second region (B) comprises a second mounting region (4) configured to mount a second optical cable; and
the connection region (6) is configured to communicate the second optical cable with the first optical cable, wherein the connection region (6) comprises a plurality of working positions (61) configured to communicate the second optical cable with the first optical cable and a plurality of storage positions (62) configured to place.

2. The flexible optical fiber management system according to claim 1, wherein
the second region (B) further comprises a second fiber splicing region (5) configured to splice the second optical cable with a first tail fiber, and the second fiber splicing region (5) is arranged corresponding to the second mounting region (4).

3. The flexible optical fiber management system according to claim 2, wherein
the first mounting region (3) and the second mounting region (4) are mounted on a side wall of the box body, and the first mounting region (3) and the second mounting region (4) are located on the same side of the box body and are respectively located close to both ends of the box body.

4. The flexible optical fiber management system according to claim 2, wherein
the second region (B) is further provided with a third fiber blocking region (H) and a fourth fiber blocking region (I), the third fiber blocking region (H) and the fourth fiber blocking region (I) are respectively located on opposite sides of the second fiber splicing region (5), the third fiber blocking region (H) is configured to restrict the routing of the second optical cable, and the fourth fiber blocking region (I) is configured to restrict the routing of the first tail fiber.

5. The flexible optical fiber management system according to claim 4, wherein
the second region (B) is further provided with a second storage reversing region (E), and an extending direction of the second storage reversing region (E) is the same as that of the fourth fiber blocking region (I) and are all parallel to the connection region (6).

6. The flexible optical fiber management system according to claim 5, wherein
the connection region (6) is equipped with an optical fiber adapter, the optical fiber adapter is provided with the working position (61) that runs through both sides, one side of the working position (61) faces the first region (A) and is configured to connect the first optical cable, and the other side faces the second region (B) and is configured to connect the second optical cable; and
the storage position (62) faces the second region (B) and is configured to place the second optical cable.

7. The flexible optical fiber management system according to claim 1, wherein
relative to the first fiber splicing region (8), the first mounting region (3) is biased away from the connection region (6);
the first fiber splicing region (8) is provided with a second tail fiber, one end of the second tail fiber is spliced to the first optical cable in the first fiber splicing region (8), and the other end of the second tail fiber is connected to the working position (61);
or, the first region (A) is provided with a third mounting region (C), the third mounting region (C) is equipped with an optical splitter, and one end of the optical splitter is provided with a first connection line, the other end is provided with a second connection line communicated with the first connection line; and the first connection line is spliced to the first optical cable in the first fiber splicing region (8), and the second connection line is connected to the working position (61).

8. The flexible optical fiber management system according to claim 1, wherein
a first fiber blocking region (F) is provided on the side of the first fiber splicing region (8) away from the connection region (6), and the first fiber blocking region (F) is configured to restrict the routing of the first optical cable; and
a second fiber blocking region (G) is provided on the side of the first fiber splicing region (8) close to the connection region (6), and the second fiber blocking region (G) is configured to restrict the routing of the second tail fiber or the routing of the first connection line.

9. The flexible optical fiber management system according to claim 7, wherein
a first storage reversing region (D) is provided on the side of the first fiber splicing region (8) away from the first mounting region (3), and the first storage reversing region (D) is configured to store or reverse the second tail fiber or the second connection line; and
along the arrangement direction of the first region (A), the connection region (6) and the second region (B), the first storage reversing region (D) corresponds to one end of the connection region (6).

10. The flexible optical fiber management system according to claim 1, wherein the first mounting region (3) comprises:
a first sealing module (31), which is mounted on a side wall of the box body, and the first sealing module (31) is provided with a first channel (311) for the first optical cable assembly to pass through; and
a first fixing module (32), which is configured to fix the first optical cable assembly, the first fixing module (32) is located inside the box body, and the first fixing module (32) is provided with a second channel (321) directly opposite to the first channel (311).

11. The flexible optical fiber management system according to claim 10, wherein the first mounting region (3) further comprises:
a microtube-to-microcable fixed sealing module (33), which is mounted in the box body, so that the first sealing module (31), the first fixing module (32) and the microtube-to-microcable fixed sealing module (33) are arranged successively from outside to inside, and the microtube-to-microcable fixed sealing module (33) is configured to separate the first optical cable assembly.

12. The flexible optical fiber management system according to claim 1, wherein the second mounting region (4) comprises a second sealing module (41), which comprises:
a sealing component (411), which is provided with a third channel (4111) for the second optical cable to pass through; and
a pressing block (315), which resists the top of the sealing component (411) and allows the sealing component (411) to seal the second optical cable.

13. The flexible optical fiber management system according to claim 12, wherein
the second mounting region (4) further comprises a second fixing module (42) configured to fix the second optical cable;
the second fixing module (42) comprises a first module (44) and a second module (45) arranged in parallel, and a third module (46) located between the first module (44) and the second module (45), and the third module (46) and the first module (44) are arranged in a staggered manner.

14. The flexible optical fiber management system according to claim 1, wherein the connection region (6) comprises:
a working area module (63), which is arranged obliquely relative to the side wall of the box body, and the working area module (63) is provided with the plurality of the work positions (61); and
a storage area module (64), which is arranged obliquely relative to the side wall of the box body, and the storage area module (64) is provided with the plurality of the storage positions (62).

15. The flexible optical fiber management system according to claim 14, wherein
both the working area module (63) and the storage area module (64) comprise a pedestal (65) provided with a slideway groove (651) and a clamping strip (66) provided with a sliding shaft (661), the sliding shaft (661) matches the slideway groove (651) in a sliding manner, and
the clamping strip (66) of the working area module (63) is provided with the working position (61), and the clamping strip (66) of the storage area module (64) is provided with the storage position (61).

16. The flexible optical fiber management system according to claim 1, wherein the connection region (6) comprises:
a plurality of adapter modules (67), which are arranged obliquely relative to a side wall of the box body, the plurality of the adapter modules (67) are arranged in a row, each of the adapter modules (67) is provided with a working area and a storage area, the working area is provided with at least one row of the working positions (61), and the storage area is provided with at least one row of the storage positions (62).

17. A network access method of the flexible optical fiber management system according to claim 1, comprising the following steps:
performing sealing and fixing on the first optical cable assembly in the first mounting region (3);
performing splicing on one end of the first optical cable in the first fiber splicing region (8) so as to connect the first optical cable to the working position (61);
performing sealing and fixing on the second optical cable in the second mounting region (4);
placing one end of the second optical cable on the plurality of the storage positions (62) in the connection region (6);
judging whether user services need to be activated; and
if so, deploying the second optical cable to the working position (61) so as to communicate the second optical cable with the first optical cable.

18. The network access method according to claim 17, wherein the step of performing splicing on one end of the first optical cable in the first fiber splicing region (8) so as to connect the first optical cable to the working position (61) comprises the following steps:
judging whether an optical splitter is adopted in the application scenario;
if so, adding the optical splitter to the first region (A), splicing the first connection line at one end of the optical splitter with the first optical cable, and connecting the second connection line at the other end of the optical splitter to the working position (61); and
if not, adding a second tail fiber to the first region (A), splicing one end of the second tail fiber with the first optical cable, and connecting the other end of the second tail fiber to the working position (61).

19. The network access method according to claim 17, wherein the connection region (6) comprises a working area module (63) provided with the working position (61) and a storage area module (64) provided with the storage position (62), and the step of placing one end of the second optical cable on the plurality of the storage positions (62) in the connection region (6) comprises the step of:
placing one end of the second optical cable in the storage area module (64).

20. The network access method according to claim 17, wherein the step of performing sealing and fixing on the first optical cable assembly in the first mounting region (3) comprises the following steps:
performing sealing on the first optical cable assembly through the first sealing module (31), and fixing the first optical cable assembly through the first fixing module (32) located on one side of the first sealing module (31), so that one end of the first optical cable assembly passes through the first sealing module (31) and the first fixing module (32) successively;
separating the first optical cable from the microtubes of the first optical cable assembly; and
fixing a central reinforcing member or aramid yarn of the first optical cable.

21. The network access method according to claim 17, wherein the step of performing sealing and fixing on the second optical cable in the second mounting region (4) comprises the following steps:
performing sealing on the second optical cable through the second sealing module (41), and fixing the second optical cable through the second fixing module (42) located on one side of the second sealing module (41), so that one end of the second optical cable passes through the second sealing module (41) and the second fixing module (42) successively; and
fixing a central reinforcing member or aramid yarn of the second optical cable.

22. The network access method according to claim 17, wherein the second region (B) further comprises a second fiber splicing region (5) provided with a first tail fiber, and after the step of performing sealing and fixing on the second optical cable in the second mounting region (4), further comprising the following step:
performing splicing on one end of the first tail fiber with one end of the second optical cable in the second fiber splicing region (5).
